# EUROPÄISCHE PATENTANMELDUNG

(11) **EP 2 811 137 A1**
(43) Veröffentlichungstag der Anmeldung: **10.12.2014**
(21) Anmeldenummer: 13170443.9
(22) Anmeldetag: 04.06.2013
(51) Int. Cl.: F02B 77/11, B60R 13/08, C08L 75/04, C08G 101/00

(54) **Thermische Isolation eines Verbrennungsmotors**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft einen thermisch isolierten Verbrennungsmotor, wobei die Oberfläche eines oder mehrere Teile des Verbrennungsmotors ganz oder teilweise mit einem Polyurethanschaumstoff umgeben ist. Weiter betrifft die vorliegende Erfindung ein Verfahren zur Herstellung eines thermisch isolierten Verbrennungsmotors, wobei man ein Motorteil vorlegt, den zu umschäumenden Teil des Motorteils mit einer Form umgibt, so dass zwischen Motorteil und Form ein Hohlraum entsteht, eine Polyurethanreaktionsmischung in den Hohlraum gibt, die Polyurethanreaktionsmischung zu einem Polyurethanschaumstoff ausreagieren lässt und die Form entfernt.

## Beschreibung

Die vorliegende Erfindung betrifft einen thermisch isolierten Verbrennungsmotor, wobei die Oberfläche eines oder mehrere Teile des Verbrennungsmotors ganz oder teilweise mit einem Polyurethanschaumstoff umgeben ist. Weiter betrifft die vorliegende Erfindung ein Verfahren zur Herstellung eines thermisch isolierten Verbrennungsmotors, wobei man ein Motorteil vorlegt, den zu umschäumenden Teil des Motorteils mit einer Form umgibt, so dass zwischen Motorteil und Form ein Hohlraum entsteht, eine Polyurethanreaktionsmischung in den Hohlraum gibt, die Polyurethanreaktionsmischung zu einem Polyurethanschaumstoff ausreagieren lässt und die Form entfernt.

Verbrennungsmotoren, insbesondere in Kraftfahrzeugen sind ausgelegt auf bestimmte Betriebstemperaturen, die oberhalb der Umgebungstemperatur liegen. Bei Betrieb des kalten Motors kommt es zu einem erhöhten Verschleiß des Motors, weiterhin ist der Kraftstoffverbrauch bei kalten Motor deutlich höher als bei Betriebstemperatur, die Emission von Schadstoffen ist höher, und auch die Heizleistung des Kraftfahrzeugs ist bei kaltem Motor unzureichend. Besonders störend macht sich dies bemerkbar, wenn häufig hintereinander kurze Strecken gefahren werden. Dabei kommt es zwischen den Fahrten zu einer Abkühlung des Motors, und die gefahrene Strecke reicht häufig nicht aus, den Motor auf Betriebstemperatur zu bringen. In diesen Fällen ist der Motorverschleiß hoch, und der Kraftstoffverbrauch ist inakzeptabel. Insgesamt ist es vorteilhaft, wenn ein Verbrennungsmotor nach dem Start schnell die Betriebstemperatur erreicht und beim kurzzeitigen Abstellen, die erzeugte Wärme noch möglichst lange hält, so dass die nachfolgende Warmlaufphase möglichst verkürzt wird.

Dies kann beispielsweise durch die thermische Isolation des Verbrennungsmotors erreicht werden. Eine solche thermische Isolation ist bekannt und beispielsweise in DE 199 35 335 beschrieben. So offenbart DE 199 35 335 eine thermische Isolation für Verbrennungsmotoren aus Polyurethan. Dabei kann das Aufbringen der Isolation durch direktes Anschäumen des Polyurethanhartschaums an das Motorgehäuse geschehen. Dazu kann das Motorgehäuse und die Zusatzaggregate umschäumt werden. Der Vorteil dieser Ausführungsform liegt in einer vollständigen Abdichtung des Motorgehäuses, was zu einer sehr guten Wärme- und insbesondere Schallisolierung führt. Außerdem ist dieses Verfahren sehr leicht durchführbar, da nur die flüssigen Schaumkomponenten auf die Motoroberfläche aufgebracht werden müssen und keine separate Formgebung und Anpassung der Umkapselung erfolgen muss. Nachteilig ist jedoch, dass bei Arbeiten am Motor die Umkapselung entfernt werden muss, was in jedem Fall mit ihrer Zerstörung verbunden ist. Außerdem ist die Zugänglichkeit der Motoroberfläche für Wartungsarbeiten beeinträchtigt, der Austausch von defekten Bauteilen wie Sensoren ist nicht ohne weiteres möglich.

Eine weitere Möglichkeit der stoffschlüssigen Umkapselung der Motoren kann darin bestehen, die Isolation in einem Stück oder in mehreren Teilen herzustellen, vorzugsweise als Formkörper, und diese dann mit dem Motorgehäuse zu verkleben. Auch dabei kann eine vollständige Abdichtung des Motorgehäuses mit den oben erwähnten Vorteilen erreicht werden. Weiter ist auch hier die Wartungsfähigkeit des Antriebsaggregats durch die vollständige Verkapselung stark erschwert. Darüber hinaus ist der Herstellaufwand von Isolationsbauteilen, die nachträglich mit der Motoroberfläche verklebt werden, vergleichbar hoch, was sich in erhöhten Kosten niederschlägt.

Eine weitere Möglichkeit, die in DE 199 35 335 offenbart ist, ist die Umkapselung als selbsttragende Einheit. Dabei können Formteile aus Polyurethanschaum hergestellt und diese um den Motor angebracht werden. Auch hier ist es wiederum möglich, die Verkapselung als ein Teil oder in Form von mehreren Teilen auszugestalten. Der Vorteil dieser Ausführungsform gegenüber der direkten Umschäumung des Antriebsaggregats liegt in der einfachen Demontage der Umkapselung bei Wartungs- oder Reparaturarbeiten am Motor und der möglichen Wiederverwendung der Umkapselung. Nachteilig gegenüber der direkten Verschäumung des Motors sind der höhere Aufwand bei der Herstellung und Anbringung der Umkapselung sowie der deutlich höhere Raumbedarf der Isolierung. Außerdem kann es beim Betrieb des Motors zu einer Lockerung der Umkapselung und damit zu einer möglichen Verschlechterung der Wärme- und Geräuschdämmung des Motors durch Dichtigkeitsprobleme kommen.

Aufgabe der vorliegenden Erfindung war es daher, eine thermische Isolierung für einen Verbrennungsmotor zu liefern, der leicht gewartet werden kann und wobei die Isolierung nur wenig Bauraum beansprucht.

Die erfindungsgemäße Aufgabe wird gelöst durch einen thermisch isolierten Verbrennungsmotor, wobei die Oberfläche eines oder mehrere Teile des Verbrennungsmotors ganz oder teilweise mit einem Polyurethanschaumstoff umgeben ist, wobei andere Teile des Verbrennungsmotors ganz oder teilweise nicht vom Polyurethanschaumstoff umschlossen sind. Weiter wird die erfindungsgemäße Aufgabe gelöst durch ein Verfahren zur Herstellung eines thermisch isolierten Verbrennungsmotors bei dem man ein Motorteil vorlegt, den zu umschäumenden Teil des Verbrennungsmotorteils mit einer Form umgibt, so dass zwischen Motorteil und Form ein Hohlraum entsteht, eine Polyurethanreaktionsmischung in den Hohlraum gibt, die Polyurethanreaktionsmischung zu einem Polyurethanschaumstoff ausreagieren lässt und die Form entfernt.

Ein üblicher Verbrennungsmotor, wie er beispielsweise in Kraftfahrzeugen eingesetzt wird umfasst das Kurbelgehäuse mit den Zylinderrohren und der Kurbelwelle, sowie den Zylinderkopf, der den Verbrennungsraum eines Verbrennungsmotors nach oben abschließt. Bei allen modernen Viertaktmotoren beherbergt der Zylinderkopf die Ein- und Auslasskanäle und die Ventilsteuerung für die Gaswechselvorgänge inklusive der Ventile, Ölkanäle für die Schmierung des Ventiltriebs und bei wassergekühlten Motoren auch Kühlmittelkanäle, bei Ottomotoren die Zündkerzen und bei Dieselmotoren die Einspritzdüsen. An das Kurbelgehäuse schließt nach unten die Ölwanne an. Der Räderkasten ist meist an der Vorderseite des Motors angebracht, und umfasst beispielsweise, falls vorhanden, den Antrieb für den Ventiltrieb und die Kühlwasserpumpe. Dabei schließt der Räderkastendeckel den Räderkasten zum Kurbelgehäuse hin ab. Motoren mit Hochdruckeinspritzung weisen eine Einspritzpumpe auf, allen Motoren gemein sind darüber hinaus zahlreiche am Kurbelgehäuse angeschraubte Aggregate wie den Generator, den Starter und beispielsweise den Kompressor der Klimaanlage. Weiter kann ein Verbrennungsmotor im Sinn der Erfindung ein Getriebe und ein Saugmodul zum Ansaugen des Arbeitsgases umfassen. Im Rahmen der vorliegenden Erfindung werden diese Bauteile als "Teile des Verbrennungsmotors" bezeichnet.

Vorzugsweise umgibt der Polyurethanschaumstoff jeweils ganz oder teilweise die Oberfläche des Kurbelgehäuses, der Ölwanne, des Zylinderkopfes, des Getriebegehäuses und/oder des Räderkastendeckels. Auch können einzelne Anbindungsbauteile wie Motorträger oder Aggregate vollständig oder teilweise mit Polyurethanschaumstoff beschichtet werden. Dabei umgibt der Polyurethanschaumstoff die Motorteile vorzugsweise kraftschlüssig und/ oder formschlüssig, besonders bevorzugt haften die Polyurethanschaumstoffe an der Oberfläche der betreffenden Motorteile, beispielsweise durch die Klebewirkung des Polyurethans. In einer weiteren bevorzugten Ausführungsform kann der Polyurethanschaumstoff auch von der Oberfläche der Motorteile beabstandet sein, beispielsweise 0,1 bis 10 mm. Weiter weist der Polyurethanschaumstoff vorzugsweise Aussparungen an Stellen auf, an denen Sensoren, wie Klopfsensoren, am Motor montiert werden.

Zumindest teilweise nicht vom Polyurethanschaumstoff umschlossen und damit zugänglich, beispielsweise für Wartungs- und Reparaturarbeiten, sind die dem Motor abgewandte Seite (Außenseite) der Riemenscheibe, des Generators, der Wasserpumpe und des Ölfilters. Dabei ist die Polyurethanisolierung in Nachbarschaft dieser Bauteile so ausgelegt, dass diese Bauteile ohne Beschädigung des Polyurethanschaumstoffs ausgebaut werden können. Vorzugsweise wird ein Wärmeverlust durch Teile, die nicht in die isolierende Polyurethanschicht einbezogen werden, dadurch vermieden, dass zwischen dem nicht einbezogenen Teil und dem Motor oder dem Getriebe eine Isolationsschicht, beispielsweise aus hochfestem Kunststoff, platziert oder indem die Kontaktfläche soweit möglich vermindert wird.

Ebenfalls zumindest teilweise nicht vom Polyurethanschaumstoff umschlossen sind Oberflächen von Motorteilen, die eine Betriebstemperatur von mehr als 180 °C aufweisen können, wie beispielsweise der Krümmerflansch der Abgasanlage, der Katalysator oder ein gegebenenfalls vorhandener Turbolader. Dabei soll möglichst eine Überhitzung dieser Bauteile während des Betriebs vermieden werden. Um eine mögliche Zerstörung von Polyurethanschaumstoff in der Umgebung dieser Hochtemperaturbauteile zu verhindern, werden diese Hochtemperaturbauteile vorzugsweise mit hochtemperaturbeständigen Isolationsmaterialien, wie Glasfasermatten und/oder mineralischen Isolationsmaterialien, wie Mineralfaserfliesen, gegenüber dem Polyurethanschaumstoff isoliert. Vorzugsweise wird in der Nähe der Hochtemperaturbauteile zwischen Polyurethanschicht und Hochtemperaturbauteil entweder neben oder anstelle von den hochtemperaturbeständigen Isolationsmaterialien eine weitere Beschichtung aus hochtemperaturbeständigen Isolationsmaterialien aufgebracht, die in der Lage sind, den Polyurethanschaumstoff vor Wärmestrahlung zu schützen. Besonders bevorzugt handelt es sich dabei um eine Folie, die eine metallische Oberfläche aufweist, beispielsweise um eine Aluminiumfolie. Dieser Strahlungsschutz kann auch an der Oberfläche des Polyurethans aufgebracht sein. Besonders bevorzugt ist die Oberfläche der Hochtemperaturbauteile, die nicht zu einer Polyurethanisolierung zugewandt sind, thermisch nicht isoliert, so dass die Abgabe von Wärme erfolgen kann und diese Teile nicht überhitzen.

Die isolierende Polyurethanschicht ist üblicherweise so ausgelegt, dass die Wärmeabgabe des Motors möglichst stark verringert wird, aber auch nicht übermäßig viel Bauraum beansprucht wird. Daher beträgt die Dicke der isolierenden Polyurethanschicht üblicherweise 1 bis 100 mm, vorzugsweise 5 bis 50 mm und besonders bevorzugt 10 bis 40 mm. Dabei ist bei direkter Haftung des Polyurethanschaumstoffs auf den Motorteilen keine separate, nachträgliche Verklebung oder eine Dichtung zwischen den isolierten Motorteilen nötig.

Zum Schutz gegen aggressive Flüssigkeiten, wie Kraftstoff, Motorenöl, Bremsflüssigkeit oder Frostschutzmittel, kann die Innenseite und/oder die Außenseite des Polyurethanschaumstoffs auch noch mit einer Metallschicht umgeben sein, beispielsweise mit einer dünnen Aluminiumschicht. Dies führt darüber hinaus noch zu einer zusätzlichen Reflexion der Wärmestrahlung. Außerdem kann die äußere Oberfläche noch dekorativ gestaltet werden.

Die erfindungsgemäß eingesetzten Polyurethanschaumstoffe weisen vorzugsweise eine hohe Temperaturstabilität auf. Sie müssen eine Dauertemperatur von mindestens 140°C, vorzugsweise 150°C und besonders bevorzugt 180°C, bevorzugt über einen Zeitraum von 10 bis 20 Jahren ohne Beeinträchtigung überstehen.

Die Polyurethanschaumstoffe können auch mindestens eine Schicht enthalten, die der Körperschalldämmung dient. Beispiele hierfür sind Polyurethane mit speziellen Füllstoffen, beispielsweise Schwerspat. Nach Möglichkeit werden diese Schichten in der Mitte oder an der dem Motor abgewandten Seite angebracht, da sie zumeist nicht temperaturbeständig sind. In diesem Fall ist es bevorzugt, wenn die Schicht zur Körperschalldämmung eine Dicke von 0,5 bis 10 mm aufweist.

Die Herstellung der erfindungsgemäß verwendeten Polyurethanschäume erfolgt durch Umsetzung von Polyisocyanaten mit Verbindungen mit mindestens zwei mit Isocyanatgruppen reaktiven Wasserstoffatomen. Zur Herstellung der vorzugsweise eingesetzten temperaturstabilen Polyurethanhartschäume werden vorzugsweise folgende Einsatzkomponenten verwendet:
Als Polyisocyanate kommen üblicherweise aliphatische und/oder aromatische Polyisocyanate zum Einsatz, wobei vorzugsweise aromatische Polyisocyanate verwendet werden. Die größte technische Bedeutung haben dabei Toluylendiisocyanat-Isomere und insbesondere Diphenylmethandiisocyanat-Isomere. Vorzugsweise eingesetzt werden jedoch Gemische aus Diphenylmethandiisocyanaten und Polyphenylen-Polymethylen-Polyisocyanaten, sogenanntes Roh-MDI.
Als Polyisocyanate können auch sogenannte modifizierte Polyisocyanate eingesetzt werden, das heißt Polyisocyanate, die durch den Einbau von beispielsweise Urethan-, Allophanat- oder Isocyanuratgruppen modifiziert wurden. Für den Einsatz in temperaturstabilen Polyurethanhartschäumen haben mit Isocyanuratgruppen modifizierte Polyisocyanate besondere Bedeutung, die daraus hergestellten Hartschaumstoffe werden häufig auch als Polyisocyanuratschäume (PIR-Schäume) bezeichnet.

Als Verbindungen mit mindestens zwei mit Isocyanatgruppen reaktiven Wasserstoffatomen werden zumeist Polyetheralkohole und/oder Polyesteralkohole eingesetzt mit Molekulargewichten von größer 400 bis ca. 20000 Dalton eingesetzt.

Bei den Polyesteralkoholen handelt es sich um Umsetzungsprodukte von mehrfunktionellen Carbonsäuren mit mehrfunktionellen Alkoholen. In der Praxis werden zumeist difunktionelle Carbonsäuren und difunktionelle Alkohole, denen geringe Mengen höher-, zumeist dreifunktioneller Alkohole zugesetzt werden können. Zur Herstellung der erfindungsgemäß verwendeten Polyurethanschäume kommen vorzugsweise Polyesteralkohole zum Einsatz, die aromatische Strukturen enthalten. Vorzugsweise werden Polyesteralkohole bei der Herstellung von Polyisocyanuratschäumen eingesetzt.

Vorzugsweise werden zur Herstellung der erfindungsgemäß verwendeten Polyurethane Polyetheralkohole eingesetzt. Die Herstellung der Polyetheralkohole erfolgt zumeist durch katalytische Anlagerung von Alkylenoxiden, insbesondere Ethylenoxid und/oder Propylenoxid, an H-funktionelle Startsubstanzen. Als Startsubstanzen kommen zumeist mehrfunktionelle Alkohole, beispielsweise Glykole, Glycerin, Trimethylolpropan, Pentaerythrit, oder Zuckeralkohole, wie Mannit, Sorbit, Saccharose, mehrfunktionelle aliphatische und/oder aromatische Amine und/oder Aminoalkohole, wie Ethylendiamin, Ethanolamin, Toluylendiamin, Diphenylmethandiamin bzw. Gemische aus Diphenylmethandiamin und Polymethylenpolyphenylenpolyamin, oder H-funktionelle Mannich-Kondensate zum Einsatz.

Zu den Verbindungen mit mindestens zwei mit Isocyanatgruppen reaktiven Wasserstoffatomen gehören auch die sogenannten Kettenverlängerer und/oder Vernetzer. Dabei handelt es sich um Alkohole und/oder Amine mit Molekulargewichten von 62 bis 400 Dalton. Dabei weisen Kettenverlängerer zwei, Vernetzungsmittel mindestens 3 gegenüber Isocyanat reaktive Wasserstoffatome auf.

Zur Herstellung der erfindungsgemäß verwendeten Polyurethane enthält zumindest ein Teil der Verbindungen mit mindestens zwei mit Isocyanatgruppen reaktiven Wasserstoffatomen aromatische Strukturen. Besonders bewährt haben sich solche Polyurethan-Hartschäume, bei denen 10 bis 20 Gew.-% der Verbindungen mit mindestens zwei mit Isocyanatgruppen reaktiven Wasserstoffatomen ein Polyetheralkohol auf Basis von aromatischen Aminen, insbesondere Toluylendiamin, besteht.

Die Polyurethan-Hartschaumstoffe werden zumeist unter Verwendung von üblichen Urethanbildungskatalysatoren, beispielsweise tertiären Aminen oder organischen und/oder anorganischen Schwermetallsalzen, hergestellt.

Als Treibmittel werden Wasser und/oder bekannte physikalische Treibmittel, beispielsweise Alkane, Cycloalkane, halogenierte Alkane, Ketone, oder andere Stoffe, die bei der Urethanbildungsreaktion verdampfen, eingesetzt. Es ist auch möglich, den flüssigen Urethanbildungskomponenten Gase, beispielsweise Kohlendioxid, zuzusetzen.

Die erfindungsgemäß eingesetzten Polyurethan-Schaumstoffe haben vorzugsweise eine Rohdichte im Bereich zwischen 40 und 200 g/l, insbesondere zwischen 60 und 120 g/l. Die Wärmeleitfähigkeit liegt vorzugsweise im Bereich zwischen 0,010 und 0,050 W/m*K. Sie sind bis zu einer Dauergebrauchstemperatur von 140°C, insbesondere von 150°C und vorzugsweise von 180°C temperaturstabil.

Die Herstellung des thermisch isolierten Verbrennungsmotors erfolgt vorzugsweise indem man eines oder mehrere zu isolierende Motorenteile vorlegt, den zu umschäumenden Teil mit einer Form umgibt, so dass zwischen Motorteil und Form ein Hohlraum entsteht, eine erfindungsgemäße Polyurethanreaktionsmischung in den Hohlraum gibt, die Polyurethanreaktionsmischung zu einem Polyurethanschaumstoff ausreagieren lässt und die Form entfernt. Dazu werden die Einsatzkomponenten zur Herstellung der erfindungsgemäßen Polyurethanschaumstoffe vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Einsatzkomponenten bei Reaktionsumsätzen kleiner 90 %, bezogen auf die Isocyanatgruppen, als Reaktionsmischung bezeichnet.

Dabei können Motorteile einzeln isoliert und später montiert werden oder ganze Baugruppen des Verbrennungsmotors werden gleichzeitig umschäumt. Vorzugsweise wird der Polyurethanschaumstoff in der Form verdichtet. Dabei beträgt der Verdichtungsfaktor vorzugsweise 1,1 bis 10, besonders bevorzugt 1,5 bis 7 und insbesondere 2 bis 5. Der Verdichtungsfaktor ergibt sich dabei aus dem Verhältnis aus freigeschäumter Dichte und Formteildichte.

Die Verwendung einer Form zur Bildung des Hohlraumes hat dabei folgende Vorteile: Durch die Form kann die genaue Materialstärke lokal den Anforderungen entsprechend dimensioniert werden. Die kraft- und/ oder formschlüssige bzw. stoffschlüssige Verbindung mit der Bauteiloberfläche erfolgt unmittelbar durch die Klebewirkung der Polyurethanreaktionsmischung und die Formgebung. Es ergibt sich eine gasdichte Verbindung zwischen Polyurethan und umschäumten Motorteil, so dass mögliche Dichtigkeitsprobleme wie bei einer selbsttragenden Isolationseinheit sicher vermieden werden. Dabei wird die Form vorzugsweise so gestaltet, dass beim Schäumprozess alle Oberflächenbereiche, die nicht mit Polyurethanschaum bedeckt werden sollen, freigehalten werden. Dadurch können alle Anschlüsse, die an der Motoroberfläche erforderlich sind, realisiert werden. Insbesondere werden Anschlüsse für Sensoren, Kraftstoff-, Öl-, Elektroleitungen, Aggregate, Halter und die Verschraubungen vom Polyurethanschaumstoff freigehalten. Im Gegensatz zur frei aufgebrachten Isolationsschicht aus Polyurethanschaum ist somit die Zugänglichkeit dieser Anschlüsse gewährleistet und dadurch eine Demontage/Remontage möglich. Ein weiterer Vorteil des erfindungsgemäßen Verfahrens zur Umschäumung von Motorteilen unter Einsatz einer Form besteht darin, dass die Polyurethanreaktionsmischung in der Form eine Formhaut ausbildet, die sich durch eine erhöhte Oberflächenfestigkeit auszeichnet. Dies kommt der Alltagstauglichkeit der Schaumoberfläche zugute, da diese dadurch robuster und weniger anfällig gegen Verschmutzungen wird. Die Aufbringung der Schaumisolation in einem Formhohlraum bietet darüber hinaus auch die Möglichkeit, dass Anbauteile des Verbrennungsmotors , wie Flüssigkeitsleitungen, Kabel und Steckergehäuse oder Befestigungselemente mit in das Isolationsbauteil einbezogen werden können, das heißt vom Polyurethanschaumstoff mit umschlossen sind. Die Einbeziehung in die Schaumisolation ermöglicht, dass in diesem Zug eigene Halter oder Anbindungspunkte auf der Oberfläche des Antriebs entfallen können. Dadurch können Herstellkosten eingespart und die Montage erleichtert werden können. Darüber hinaus kann die Integration von Anbauteilen in das Isolationsbauteil bei günstiger Ausführung die Geräuschemission der Anbauteile günstig beeinflussen und die Beanspruchung der Anbauteile durch Beschleunigungskräfte reduzieren. Zusätzlich ermöglicht der Einsatz einer Form auch die gleichzeitige Applikation einer Beschichtung auf den Polyurethanschaum in einem Arbeitsgang, die beispielsweise aus einer Metall- oder Kunststofffolie bestehen kann. Dazu wird als Oberflächenbeschichtung beispielsweise eine Kunststoff- oder Metallfolie vor dem Einbringen der Polyurethanreaktionsmischung in die Form eingelegt. Dadurch werden die Festigkeits- und Strahlungseigenschaften, die Chemikalienbeständigkeit und/oder die Oberflächenanmutung günstig beeinflusst.

Ein thermisch isolierter Verbrennungsmotor gemäß vorliegender Erfindung wird üblicherweise durch Montieren der hergestellten, isolierten Teile des Motors erhalten.

Vorteile der vorliegenden Erfindung sind ein geringerer Verbrauch durch verkürzten Warmlauf, weniger Schadstoffemission, verbesserte Heizleistung, insbesondere bei verbrauchsverbesserten Antrieben, und eine geringere Schallemission.

## Patentansprüche

1. Thermisch isolierter Verbrennungsmotor **dadurch gekennzeichnet, dass** die Oberfläche eines oder mehrere Teile des Verbrennungsmotors ganz oder teilweise mit einem Polyurethanschaumstoff umgeben ist.

2. Thermisch isolierter Verbrennungsmotor nach Anspruch 1, **dadurch gekennzeichnet, dass** der Polyurethanschaumstoff die Teile des Verbrennungsmotors form- und/oder kraftschlüssig umgibt.

3. Thermisch isolierter Verbrennungsmotor nach Anspruch 2, **dadurch gekennzeichnet, dass** der Polyurethanschaumstoff auf der Oberfläche der Teile des Verbrennungsmotors haftet.

4. Thermisch isolierter Verbrennungsmotor nach Anspruch 1, **dadurch gekennzeichnet, dass** der Polyurethanschaumstoff von der Oberfläche der Teile des Verbrennungsmotors 0,1 bis 10 mm beabstandet ist.

5. Thermisch isolierter Verbrennungsmotor nach einem der Ansprüche 1 bis 4, **dadurch gekennzeichnet, dass** der Polyurethanschaumstoff Öffnungen für Sensoren Kraftstoff-, Öl-, Elektroleitungen, Aggregate, Halter und/oder die Verschraubungen aufweist.

6. Thermisch isolierter Verbrennungsmotor nach einem der Ansprüche 1 bis 5, **dadurch gekennzeichnet, dass** der Polyurethanschaumstoff die Außenseite der Ölwanne ganz oder teilweise umgibt.

7. Thermisch isolierter Verbrennungsmotor nach einem der Ansprüche 1 bis 6, **dadurch gekennzeichnet, dass** der Polyurethanschaumstoff die Außenseite des Kurbelgehäuses ganz oder teilweise umgibt.

8. Thermisch isolierter Verbrennungsmotor nach einem der Ansprüche 1 bis 7, **dadurch gekennzeichnet, dass** der Polyurethanschaumstoff die Außenseite des Zylinderkopfes ganz oder teilweise umgibt.

9. Thermisch isolierter Verbrennungsmotor nach einem der Ansprüche 1 bis 8, **dadurch gekennzeichnet, dass** der Polyurethanschaumstoff die Außenseite des Räderkastendeckels ganz oder teilweise umgibt.

10. Thermisch isolierter Verbrennungsmotor nach einem der Ansprüche 1 bis 9, **dadurch gekennzeichnet, dass** der Polyurethanschaumstoff die Außenseite des Getriebegehäuses ganz oder teilweise umgibt.

11. Thermisch isolierter Verbrennungsmotor nach einem der Ansprüche 1 bis 10, **dadurch gekennzeichnet, dass** der Polyurethanschaumstoff die Außenseite der Riemenscheiben, der angebauten Aggregate wie beispielsweise des Generators und des Ölfilters zumindest teilweise nicht umgibt.

12. Thermisch isolierter Verbrennungsmotor nach einem der Ansprüche 1 bis 11, **dadurch gekennzeichnet, dass** Motorteilen, die eine Betriebstemperatur von mehr als 180 °C aufweisen können, gegenüber dem Polyurethanschaumstoff isoliert sind.

13. Thermisch isolierter Verbrennungsmotor nach einem der Ansprüche 1 bis 12, **dadurch gekennzeichnet, dass** Anbauteile, wie Flüssigkeitsleitungen, Kabel und Steckergehäuse oder Befestigungselemente, vom Polyurethanschaum umschlossen sind.

14. Verfahren zur Herstellung eines thermisch isolierten Verbrennungsmotors nach einem der Ansprüche 1 bis 3 und 5 bis 13, **dadurch gekennzeichnet, dass** man ein Motorteil vorlegt, den zu umschäumenden Teil des Verbrennungsmotorteils mit einer Form umgibt, so dass zwischen Motorteil und Form ein Hohlraum entsteht, eine Polyurethanreaktionsmischung in den Hohlraum gibt, die Polyurethanreaktionsmischung zu einem Polyurethanschaumstoff ausreagieren lässt und die Form entfernt.

15. Verfahren zur Herstellung eines thermisch isolierten Verbrennungsmotors nach Anspruch 14, **dadurch gekennzeichnet, dass** man eine Metall- oder Kunststofffolie in die Form einlegt bevor man die Polyurethanreaktionsmischung zugibt.

16. Verfahren nach Anspruch 15, **dadurch gekennzeichnet, dass** der Polyurethanschaumstoff in der Form verdichtet wird und der Verdichtungsfaktor 1,1 bis 10 beträgt.

17. Verfahren nach Anspruch 15 oder 16, **dadurch gekennzeichnet, dass** die Form so gestaltet ist, dass Anschlüsse am Motor für Sensoren, Kraftstoff-, Öl-, Elektroleitungen, Aggregate, Halter und die Verschraubungen vom Polyurethanschaumstoff freigehalten werden.
